(19) Europäisches Patentamt
European Patent Office
Office européen des brevets

(11) Veröffentlichungsnummer : **0 068 263**
**B1**

(12) **EUROPÄISCHE PATENTSCHRIFT**

(45) Veröffentlichungstag der Patentschrift : **05.06.85**

(21) Anmeldenummer : **82105187.7**

(22) Anmeldetag : **14.06.82**

(51) Int. Cl.[4] : **C 08 G 59/62**, C 08 G 59/50, C 07 C 91/30, C 07 C 89/00, C 08 J 5/00

(54) **Verwendung von Mannich-Basen zur Herstellung von Formkörpern, neue Mannich-Basen und Verfahren zu ihrer Herstellung.**

(30) Priorität : **20.06.81 DE 3124370**

(43) Veröffentlichungstag der Anmeldung : **05.01.83 Patentblatt 83/01**

(45) Bekanntmachung des Hinweises auf die Patenterteilung : **05.06.85 Patentblatt 85/23**

(84) Benannte Vertragsstaaten : **AT BE CH DE GB LI NL**

(56) Entgegenhaltungen :
**EP-A- 0 042 617**
**DE-A- 2 025 159**
**DE-A- 2 025 343**
**DE-A- 2 612 211**
**DE-A- 2 730 642**
**DE-A- 2 823 682**

(73) Patentinhaber : **HOECHST AKTIENGESELLSCHAFT**
**Postfach 80 03 20**
**D-6230 Frankfurt am Main 80 (DE)**

(72) Erfinder : **Becker, Wilhelm, Dr.**
**Öjendorfer Höhe 37c**
**D-2000 Hamburg 74 (DE)**
Erfinder : **Marten, Manfred**
**Schneeheide 36**
**D-2104 Hamburg 92 (DE)**

**EP 0 068 263 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Es ist bekannt, aliphatische oder cycloaliphatische Amine, wie Triäthylentetramin, Isophorondiamin, m-Xylylendiamin oder 2-Aminoäthylpiperazin, entweder unmodifiziert oder in Form von Epoxidaddukten zusammen mit flüssigen Epoxidharzen auf der Basis von aromatischen oder aliphatischen Grundkörpern als lösungsmittelfreie Anstrichsysteme zu verwenden. Derartige Produkte sind im Handel und können zur Erzielung optimaler Verarbeitungseigenschaften noch Modifizierungsmittel (niedermolekulare Mono- oder Diglycidylverbindungen sowie Beschleuniger) enthalten. Die Aushärtung der Anstriche erfolgt im Temperaturbereich von 10 bis 30 °C.

Man erhält farbstabile Anstriche, jedoch mit schlechten lacktechnischen Eigenschaften und schlechten Beständigkeiten gegenüber Chemikalien. Vor allem wird die Filmoberfläche bei der Aushärtung im Temperaturbereich von 10 bis 30 °C und in Gegenwart von Luftfeuchtigkeit und $CO_2$ sehr nachteilig beeinflußt: Es treten Glanzminderung, Schleier, Weißanlaufen (« flushing ») und Ausschwitzungen auf, die die Anwendung dieser Härter für viele Anwendungszwecke unmöglich machen. Derartige Systeme eignen sich auch nicht zur Herstellung von Anstrichen, die mit Lebensmitteln in Kontakt kommen, da die Härter auf Basis von Amin den Epoxidharzbeschichtungen eine ungenügende Resistenz gegenüber organischen Säuren (z. B. Fruchtsäften) verleihen.

Durch Zusatz von Phenolen, z. B. Alkylphenolen, oder methylolgruppenhaltigen Verbindungen zu den obigen Systemen konnten zwar gewisse Verbesserungen erzielt werden, von denen die bessere Filmoberfläche hervorzuheben ist. Nach wie vor unbefriedigend ist jedoch einerseits die kurze Topfzeit der Mischungen und andererseits die Beständigkeit der erzeugten Filme gegenüber organischen Säuren, wäßrigen Agenzien und Alkohollösungen. Mit diesen Lösungsmitteln werden nämlich Bestandteile des Films, insbesondere die als Beschleuniger zugesetzten Phenole, herausgelöst, was den Einsatz solcher Systeme auf dem Lebensmittelsektor unmöglich macht.

Nachteilig ist außer der hohen Reaktivität und der dadurch bedingten bereits erwähnten kurzen Topfzeit die Eigenviskosität dieser Härtungsmittel.

Bekannt ist auch die Aktivierung von Diaminen, die als Vernetzer für Epoxidverbindungen eingesetzt werden, z. B. Äthylendiamin, Diäthylentriamin, Triäthylentetramin, Tetraäthylenpentamin oder cycloaliphatischen Diaminen durch gemeinsame Kondensation mit Phenolen und Aldehyden bzw. durch Umsetzung, z. B. von 3,3,5-Trimethyl-5-aminomethylcyclohexylamin, mit Phenol-Aldehyd-Reaktionsprodukten. Obgleich diese Kondensationsprodukte schon einige Verbesserungen gegenüber einer einfachen Aktivierung der Polyamine durch Zumischung von Phenolen bringen, genügen sie noch nicht allen Ansprüchen.

Die mit diesen bekannten Vernetzern mit Epoxidharzen auf Bisphenol A-Basis hergestellten Beschichtungen werden auch in starkem Maße durch organische Säuren angegriffen oder bilden beim Benetzen mit Wasser einen weißen Belag aus. Außerdem sind auch die mechanischen Eigenschaften der ausgehärteten Epoxidharzmassen unbefriedigend.

Aus der DE-A-26 12 211 und DE-B-20 25 159 ist weiter bekannt, daß durch Umsetzung aliphatischer Amine mit Formaldehyd und Phenol Aminhärter synthetisiert werden können, deren Mischungen mit Epoxiden Filme mit guten Beständigkeiten gegenüber organischen Säuren und verdünnten Alkoholen ergeben. Diese Härtungsmittel enthalten jedoch freies Phenol, das ebenfalls durch Lösungsmittel aus den Filmen herausgelöst werden kann, was den Einsatz solcher Systeme auf dem Lebensmittelsektor unmöglich macht.

In der DE-B-20 25 159 ist als Kondensationsprodukt 8 die Herstellung einer Mannich-Base der allgemeinen Formel

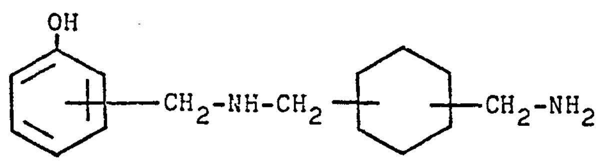

beschrieben, die kein freies Phenol enthält und die zu 35 Gew.-% in 4,4'-Diamino-3,3'-dimethylcyclohexylmethan gelöst, als Vernetzungsmittel für Epoxidharze dienen kann. Der Einsatz dieser Verbindung auf dem Lebensmittelsektor ist wegen der Phenolfreiheit möglich. Durch den geringen Anteil von phenolischen Hydroxylgruppen von 2,4 Gew.-% in dieser Lösung aus Mannich-Base und Amin ist jedoch besonders bei niedrigen Temperaturen nur eine sehr langsame Aushärtung zu erreichen.

Bekannt ist weiterhin nach DE-A-28 23 682, als Härtungsmittel Umsetzungsprodukte, die aus Mannich-Basen und Polyaminen unter Aminaustausch und Abspaltung von sekundärem Amin hergestellt werden, einzusetzen. Diese Härtungsmittel sind Umsetzungsprodukte aus Polyaminen oder aromatischen Aminen mit Mannich-Basen aus Formaldehyd, Phenolen und sekundären Aminen. Sie können, da sie Phenol nur in gebundener Form enthalten, in gewissem Umfang für Beschichtungen auf Basis von Epoxidharzen auf dem Lebensmittelsektor eingesetzt werden. Jedoch werden derartige Beschichtungen schon durch verdünnte wäßrige Lösungen organischer Säuren, wie Ameisensäure, Essigsäure oder

Milchsäure, nach kurzer Zeit zerstört. Häufig weisen diese Härtungsmittel eine relativ hohe Viskosität auf und müssen aus diesem Grunde mit Verdünnungsmitteln wie dünnflüssigen Aminen oder gegenüber den Reaktionsteilnehmern inerten Lösungs- bzw. Verdünnungsmitteln wie Benzylalkohol auf eine geeignete Verarbeitungsviskosität verdünnt werden. Dieser Zusatz beeinträchtigt die Chemikalienbeständigkeit, da der hierfür wesentliche Anteil der Mannich-Base herabgesetzt wird. Er führt darüber hinaus wenigstens bei Verwendung von hochsiedenden Verdünnungsmitteln auch zu einer Herabsetzung der Lösungsmittelbeständigkeit, da diese inerten Verdünnungsmittel nicht mit den Epoxidgruppen vernetzen und auch beim Härtungsprozeß nicht verdampfen und somit aus den Formkörpern und Überzügen durch Lösungsmittel extrahiert werden können.

Ziel der vorliegenden Erfindung ist es, die oben geschilderten Mängel von Formmassen und Überzügen durch die Verwendung von Mannich-Basen, die zum Teil neu sind, als Härtungsmittel zu beseitigen.

Gegenstand der Erfindung ist die Verwendung von Mannich-Basen der allgemeinen Formel

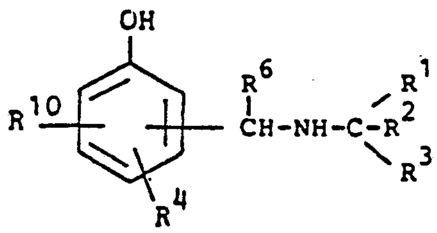 (I)

als Vernetzungsmittel von Epoxidharzen zur Herstellung von Formkörpern, die auch flächenförmig sein können, also Überzüge darstellen. Diese haben eine hervorragende Beständigkeit gegen Chemikalien und Lösungsmittel.

In der Formel (I) stellt $R^{10}$ Wasserstoff oder die Gruppe

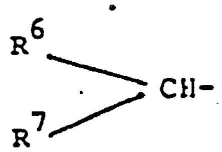

$R^1$ bis $R^3$ stellen gleiche oder verschiedene Alkylreste mit 1 bis 5 C-Atomen dar, wobei jedoch einer der Reste $R^1$ bis $R^3$ auch Wasserstoff sein kann und in diesem Fall die beiden anderen zusammen einen Alkylenrest von 4 bis 6 C-Atomen darstellen können, die jeweils durch eine für die Bildung der Mannich-Base und die Epoxidhärtungsreaktion inerte Gruppe wie —OH oder —$OR^5$ substituiert sein können ; $R^4$ bedeutet H—, HO—, HOOC— oder Alkylreste mit 1 bis 9 C-Atomen. $R^5$ bedeutet Alkyl mit 1 bis 5 C-Atomen und $R^6$ Wasserstoff oder Alkyl mit 1 bis 4 C-Atomen.

Alle Alkylreste können jeweils geradkettig oder verzweigt sein und z. B. Methyl, Äthyl, Propyl, Isopropyl, die verschiedenen Butyl-, Pentyl-, Hexyl- und Octyl-Gruppen bedeuten. Als Rest $R^7$ kommen die Verbindungen der Formeln (II) bis (XII) in Betracht :

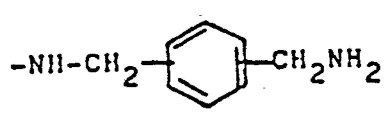 (II)

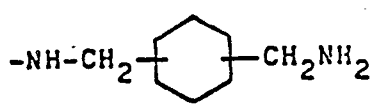 (III)

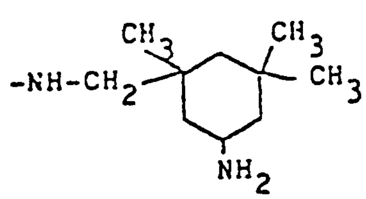

(IV)

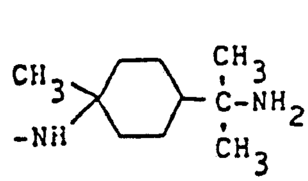

(V)

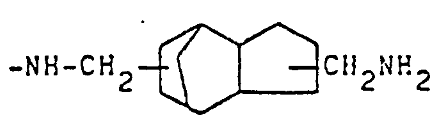 (VI)

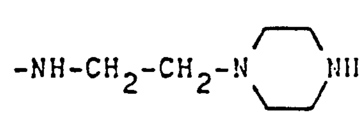 (VII)

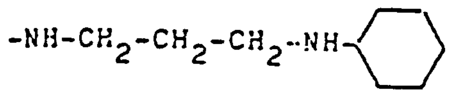

(VIII)

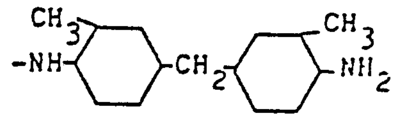

(IX)

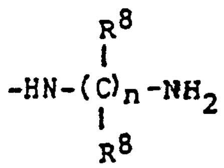

(X) ,

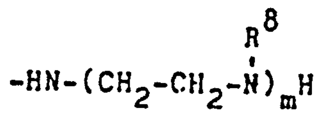

(XI) und

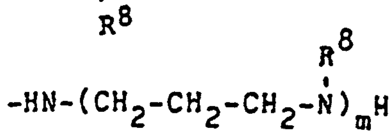

(XII)

worin in Formel (X) n eine ganze Zahl von 2 bis 6 und in Formeln (XI) bis (XII) m eine ganze Zahl von 1 bis 4 und $R^8$ H— oder $CH_3$— bedeutet und höchstens 50 %, vorzugsweise höchstens 25 % der Reste $R^8$ $CH_3$ sind.

Gegenstand der Erfindung sind auch neue Mannich-Basen der Formel (I)

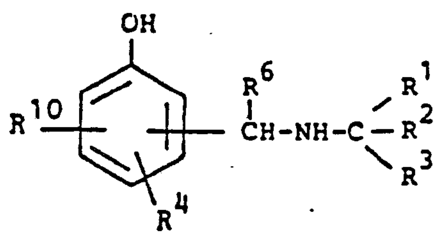

(I)

in der $R^1$ bis $R^{10}$ die angegebene Bedeutung haben. Diese Verbindungen eignen sich allein oder im Gemisch mit Mannich-Basen der allgemeinen Formel (XIII)

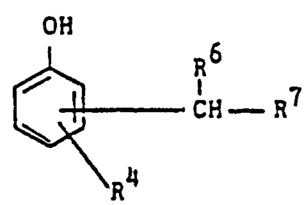

(XIII)

in der $R^4$ und $R^6$ die schon genannte Bedeutung haben und $R^7$ die Reste (II) bis (XII) bedeutet. Bevorzugt werden Gemische aus 10 bis 95, insbesondere 70 bis 95 Gew.-% der Amine der Formel (XIII) und 90 bis 5, insbesondere 30 bis 5 Gew.-% der neuen Mannich-Basen der Formel (I) eingesetzt und hier insbesondere solche, in denen $R^{10}$ Wasserstoff ist. Die Verbindungen der Formel (XIII) können auch als alleinige Härtungsmittel eingesetzt werden.

Gegenstand der Erfindung ist auch ein Verfahren zum Herstellen der vorgenannten neuen Mannich-Basen der Formel (I), das dadurch gekennzeichnet ist, daß man

a) primäre Monoamine der allgemeinen Formel

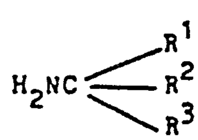

(XIV)

mit Aldehyden der allgemeinen Formel $R^6HCO$ zu Azomethinen und danach oder gleichzeitig mit Phenolen der allgemeinen Formel

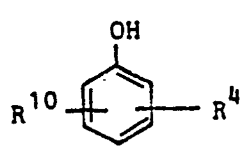

(XV)

bei Temperaturen von 20 bis 200 °C, bevorzugt 50 bis 150 °C, im Molverhältnis Monoamin : Aldehyd : Phenol von etwa 1 : 1 : (0,7-1), vorzugweise 1 : 1 : (0,8-0,95), umsetzt, wobei $R^1$ bis $R^6$ die vorgenannte Bedeutung haben, $R^{10}$ jedoch H bedeutet, oder maß man

b) zur Herstellung von Mannich-Basen der Formel (I), in der $R^{10}$

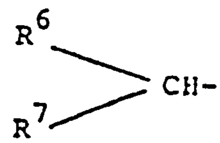

,

ist und $R^1$ bis $R^7$ die genannte Bedeutung haben, Mannich-Basen mit der allgemeinen Formel (I), in der $R^1$ bis $R^6$ die schon genannte Bedeutung haben, $R^{10}$ jedoch Wasserstoff ist, mit Aldehyden der allgemeinen Formel $R^6HCO$ und Polyaminen der Formel $HR^7$ bei Temperaturen von 20 bis 200 °C, bevorzugt 70 bis 150 °C umsetzt, wobei $R^7$ einen der Reste (II) bis (XII) bedeutet und das Molverhältnis Mannich-Base : Aldehyd : Polyamin etwa 1 : 1 : 1 beträgt.

Bei beiden Verfahrensweisen wird das Reaktionsprodukt nach erfolgter Umsetzung zweckmäßig von Wasser und nicht umgesetzten Reaktionspartnern befreit.

Die Verbindungen der Formel (XIII) können nach einem weiteren Gegenstand der Erfindung hergestellt werden, der darin besteht, daß man Mannich-Basen mit der allgemeinen Formel (I), in der $R^1$ bis $R^6$ die schon genannte Bedeutung haben, $R^{10}$ jedoch H bedeutet, mit Polyaminen der Formel $HR^7$ bei Temperaturen von 20 bis 200 °C, bevorzugt 50 bis 150 °C umsetzt, wobei $R^7$ einen der Reste (II) bis (XII) bedeutet und das Molverhältnis Mannich-Base : Polyamin von 2 : 1 bis 1 : 1 beträgt und Amin der allgemeinen Formel (XIV) abgespalten wird, worin $R^1$ bis $R^3$ die schon genannte Bedeutung haben.

Im einzelnen können für die Herstellung der Mannich-Basen der allgemeinen Formel (I), in denen $R^{10}$

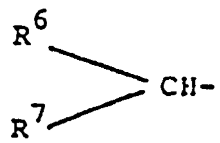

ist, gemäß Ausführungsform b) des vorliegenden Verfahrens und der Mannich-Basen der allgemeinen Formel (XIII) z. B. eingesetzt werden 1,2-, 1,3-, 1,4-Bis-(aminomethyl-) benzol, 1,2-, 1,3- und 1,4-Bis-(aminomethyl-) cyclohexan, 2,2,4- und 2,4,4-Trimethylhexamethylendiamin bzw. jeweils Gemische der Isomeren, Isophorondiamin, Tricyclododekandiamin, Menthandiamin, 2-Aminoäthylpiperazin, aliphatische gesättigte oder ungesättigte bifunktionelle Amine, z. B. niedere aliphatische Alkylenpolyamine, wie Äthylendiamin, 1,2-Propylendiamin, 1,3-Propylendiamin, 1,4-Butylendiamin, Hexamethylendiamin oder Polyalkylen-Polyamine, wie Diäthylentriamin, Triäthylentetramin oder analoge Polypropylen-Polyamine, wie Dipropylentriamin, β,β-Diamino-di-n-propylamin oder Polyoxypropylenpolyamine. Auch andere aliphatische, cycloaliphatische und araliphatische Amine mit mindestens zwei Amin-Wasserstoff-Funktionen sind verwendbar, wie 4,4'-Diaminodicyclohexylmethan, 3,3'-Dimethyl-4,4'-diaminodicyclohexylmethan, Hexahydrobenzylaminopropylamin und/oder 1,2-Diaminocyclohexan.

Die erfindungsgemäße Verwendung der Mannich-Basen erfolgt im allgemeinen nur in einem Anteil, der den Epoxidgruppen äquivalent ist oder einem Unter- oder Überschuß von bis zu 50 Mol-% entspricht. Da zu der Härtung über die reaktiven Wasserstoffe aber auch eine katalytische Härtung durch sich bildende tertiäre Amine einsetzt, kann man auch mit einem Unterschuß, bezogen auf die Epoxidgruppen, chemikalien- und lösemittelbeständige Formkörper und Überzüge erhalten.

Als primäre Monoamine (XIV) können z. B. t-Butylamin, t-Amylamin, t-Hexylamin, t-Heptylamin, t-Oktylamin, t-Nonylamin, t-Decylamin, i-Propylamin, sek-Butylamin, sek-Amylamin, Cyclopentylamin, Cyclohexylamin, 2-Aminobutanol-1, 4-Methyl-4-aminopentanol-2 und 1-Methoxymethylpropylamin, bevorzugt t-Butylamin, t-Amylamin oder Cyclohexylamin eingesetzt werden. Die Amine von t-Heptylamin an aufwärts haben also eine solche Struktur, daß kein Rest R, $R_2$ oder $R_3$ mehr als 5 C-Atome hat.

Als Aldehyde werden z. B. Acetaldehyd, Propionaldehyd und/oder die Butyraldehyde, bevorzugt aber Formaldehyd eingesetzt. Geeignete Phenole sind z. B. o-, m- und p-Kresol, p-tert-Butylphenol, Amylphenol und/oder Nonylphenol, bevorzugt jedoch Phenol.

Die Herstellung der erfindungsgemäßen Mannich-Basen der Formel (I) kann z. B. in der Weise erfolgen, daß Phenol, Aldehyd und Monoamin in molarem Verhältnis bzw. mit einem Überschuß an Phenol von bis 25, bevorzugt 5 bis 20 Mol-% bei Temperaturen von 20 bis 200 °C, vorzugsweise bis 180 °C und insbesondere 50 bis 150 °C umgesetzt werden. Man kann aber auch so verfahren, daß zunächst aus dem Monoamin und dem Aldehyd unter Wasserabspaltung das entsprechende Azomethin hergestellt wird und dieses anschließend mit der angegebenen Menge des Phenols bei den angegebenen Temperaturen umgesetzt wird.

Bevorzugt haben in den vorstehenden Formeln die Reste $R^1$ bis $R^7$ folgende Bedeutungen :

$R^1$ bis $R^3$ sind jeweils Alkyl mit 1 bis 3 Kohlenstoffatomen, das unsubstituiert ist und folglich auch

keinen Reste $R^5$ enthält ; $R^4$ ist Wasserstoff oder Alkyl mit 1 bis 9 Kohlenstoffatomen ; $R^6$ ist Wasserstoff und $R^7$ der Rest des Xylylendiamins oder des Triäthylentetramins.

Nach den erfindungsgemäßen Verfahren ist es entgegen dem bisherigen Stand der Technik möglich, Produkte zu erhalten, die einen relativ hohen Gehalt an phenolischen OH-Gruppen, vorzugsweise von mindestens 6 Gew.-% aufweisen. Ein solcher Gehalt an phenolischen OH-Gruppen ist nun wünschenswert, weil derartige Härter bei der Härtung von Epoxidverbindungen mit mehr als einer 1,2-Epoxidgruppe pro Molekül, die sich gegebenenfalls im Gemisch mit Monoepoxiden befinden, zu Produkten führen, die sich durch eine hohe Chemikalienbeständigkeit, vor allem gegenüber organischen Säuren auszeichnen und daher für die Herstellung von Beschichtungen, insbesondere auf dem Lebensmittelsektor, besonders geeignet sind und auch für Formkörper. Ferner zeigen sie einen hohen Glanz. Besonders günstig für die Verwendung auf dem Lebensmittelsektor wirkt sich auch die Tatsache aus, daß die als Härter eingesetzten Mannich-Basen keine oder nur geringe Mengen an freien Phenolen enthalten. Ein weiterer Vorteil ist darin zu sehen, daß die Härtung der Epoxidverbindungen auch bei niedrigen Temperaturen erfolgen kann.

Geeignete Epoxidharze sind z. B. solche mit einer Viskosität von 2 000 bis 40 000, bevorzugt 5 000 bis 15 000 mPa.s/25 °C, wie Diglycidyläther auf Basis von Diphenylolpropan oder -methan, Glycidyläther von Phenol-Formaldehyd-Kondensaten (Epoxidnovolake), jeweils einzeln oder im Gemisch sowie im Gemisch mit Glycidyläthern von aliphatischen ein- oder mehrwertigen Alkoholen wie n-Butanol, 2-Äthylhexanol, Butandiol, Pentaerythrit oder Phenolen, wie Phenol selbst bzw. Alkylphenolen wie o-Kresol oder p-tert.-Butylphenol, Glycidylestern von Phthalsäure, Hexahydrophthalsäure, Tetrahydrophthalsäure.

Die Beschichtungsmassen, die die erfindungsgemäß erhaltenen Amine enthalten, können übliche organische und/oder anorganische Pigmente zur Farbgebung enthalten und weitere übliche Zusätze, wie Thixotropiermitel, z. B. pyrogene Kieselsäure, Lackhilfsmittel, wie Verlaufs-, Dispergier- und Antiabsetzmittel. Sie können außerdem Lösungsmittel wie niedere Alkohole, Toluol, Xylol, Benzylalkohol, Ketone oder Flexibilisatoren wie Phthalsäureester von einwertigen Alkoholen, z. B. n-Butanol, Amylalkohol, 2-Äthylhexanol, Nonanol, Benzylalkohol einzeln oder im Gemisch, γ-Butyrolacton, δ-Valerolacton, ε-Caprolacton, niedriger- und höher-molekulare mehrwertige Alkohole, z. B. Glyzerin, Trimethylol-äthan oder -propan, Äthylenglykol sowie oxäthylierte oder oxpropylierte mehrwertige Alkohole sowie Vernetzungsbeschleuniger enthalten.

Die folgenden Beispiele 1b, 3a, 4 bis 6 und 14 bis 17 beschreiben neue Mannich-Basen (I) mit $R^{10}$ = H ; Beispiel 7 beschreibt eine Mannich-Base (I) mit $R^{10}$ =

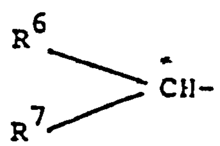

Beispiele 2a, 3b, 8 und 9 beschreiben die Herstellung von Verbindungen der Formel (XIII) ; Beispiel 1a beschreibt die Herstellung einer Vorstufe und die Beispiele 2b und 2c die Herstellung von Mischungen von Verbindungen der Formeln (I) und (XIII). In den Beispielen bedeutet % Gew.-%.

## Beispiele

1a) 730 g t-Butylamin (10 Mol) wurden unter Rühren innerhalb 1 Stunde tropfenweise mit 820 g Formaldehyd (36,5 %ig) (10 Mol) versetzt, wobei die exotherme Reaktion durch Kühlen bei 40 °C gehalten wurde. Der Ansatz wurde nach 30 Minuten bei dieser Temperatur belassen und nach Abkühlen auf Raumtemperatur in einen Scheidetrichter übergeführt. Nach vollständiger Phasentrennung wurde zunächst das Wasser abgelassen und als obere Phase 814 g (95,5 % d. Th.) N-Methylen-t-butylamin erhalten.

1b) 691 g N-Methylen-t-butylamin 8,13 Mol) wurden innerhalb von 15 Minuten mit 650 g Phenol (6,91 Mol) versetzt und auf 50 °C erwärmt, wobei eine exotherme Reaktion einsetzte, die durch Kühlen bei 50 °C gehalten wurde. Nach Abklingen der Wärmetönung wurde 2 Stunden bei 50-55 °C gerührt, auf 80 °C geheizt und 1 Stunde bei dieser Temperatur gehalten. Dann wurde langsam ein Vakuum von 40-65 mbar angelegt und dieses 30 Minuten aufrecht erhalten. Dabei destillierte Wasser und ein Überschuß von Amin ab. Die Ausbeute betrug 1 268 g (94,6 % d. Th.), und die Viskosität der Mannich-Base lag bei 80 mPa·s bei 25 °C ; Wasserstoffäquivalent 165 ; Gehalt an phenolischem Hydroxyl 8,76 %.

2a) 165 g t-Butylamin-Mannich-Base (1 Mol) nach Beispiel 1b) wurden unter Rühren mit 136 g m-Xylylendiamin (1 Mol) versetzt und auf 120 °C erwärmt. Dabei trat die Destillation von t-Butylamin ein (Brüdentemperatur 43 °C), das in einem auf 0 °C gekühlten Intensivkühler kondensiert wurde. Die Temperatur des Ansatzes stieg innerhalb von 1 Stunde von 120 °C auf 140 °C und wurde bei dieser Temperatur noch 1 Stunde gehalten, bis die Destillation vollständig beendet war. Es wurden 66 g t-Butylamin (90 % d. Th.) als Destillat erhalten. Die Mannich-Base (Viskosität 35 000 mPa·s bei 25 °C) hatte einen phenolischen Hydroxylgruppengehalt von 6,34 % und ein Wasserstoffäquivalent von 76.

2b) Eine Mischung aus 70 Gew.-% einer Mannich-Base gemäß Beispiel 2a) und 30 Gew.-% der Mannich-Base aus Beispiel 1b) hatte eine Viskosität von 9 000 mPa·s bei 25 °C, einen phenolischen Hydroxylgruppengehalt von 7,07 % und ein Wasserstoffäquivalent von 90,7.

2c) Eine Mischung aus 70 Gew.-% einer Mannich-Base gemäß Beispiel 2a) mit einem Umsetzungsgrad von 83,5 % d. Th., einem Hydroxylgruppengehalt von 6,02 %, einer Viskosität von 13 500 mPa·s bei 25 °C und einem Wasserstoffäquivalent von 72,1 und 30 Gew.-% der Mannich-Base aus Beispiel 1b) hatte eine Viskosität von 4 000 mPa·s bei 25 °C, einen phenolischen Hydroxylgruppengehalt von 6,84 % und ein Wasserstoffäquivalent von 86,7.

3a) 174 g t-Amylamin (2 Mol) wurden unter Rühren mit 160 g Phenol (1,7 Mol) versetzt und 164 g Formaldehyd (36,5 %ig) (2 Mol) innerhalb 1 Stunde bei 40 °C zugetropft. Dann wurde 5 Stunden bei 40 °C gerührt, auf Raumtemperatur abgekühlt und der Ansatz in einen Scheidetrichter übergeführt. Die Phasen wurden getrennt und die Harzphase 1 Stunde bei 80 °C bei einem Vakuum von 40-65 mbar gehalten, wobei restliches Wasser und überschüssiges Amin abdestillierten. Es wurden 320 g (ca. 90 % d. Th.) Mannich-Base mit einer Viskosität von 97 mPa·s erhalten. Der Hydroxylgruppengehalt dieses Produktes betrug 8,08 % und das Wasserstoffäquivalent 179.

3b) 179 g der t-Amylamin-Mannich-Base (1 Mol) wurden unter Rühren mit 136 g m-Xylylendiamin (1 Mol) versetzt und auf 120 °C erwärmt. Dabei trat die Destillation von t-Amylamin ein (Brüdentemperatur 75 °C). Die Temperatur des Ansatzes stieg innerhalb von 1 Stunde von 120 °C auf 140 °C und wurde bei dieser Temperatur noch 1 Stunde gehalten, bis die Destillation vollständig beendet war. Es wurden 78 g t-Amylamin (89,7 % d. Th.) als Destillat erhalten. Die relativ niedrigviskose Mannich-Base hatte einen phenolischen Hydroxylgruppengehalt von 6,34 % und ein Wasserstoffäquivalent von 76.

4) 146 g t-Butylamin (2 Mol) wurden unter Rühren mit 160 g Phenol (1,7 Mol) versetzt und 164 g Formaldehyd (36,5 %ig) (2 Mol) innerhalb von 40 Minuten bei 25 °C zugetropft. Dann wurde 5 Stunden bei 40 °C gerührt, auf Raumtemperatur abgekühlt und der Ansatz in einen Scheidetrichter übergeführt. Die Phasen wurden getrennt und die Harzphase 1 Stunde bei 80 °C unter einem Vakuum von 40-65 mbar gehalten, wobei restliches Wasser und überschüssiges Amin abdestillierte. Es wurden 288 g Mannich-Base (87,3 % d. Th.) mit einer Viskosität von 115 mPa·s bei 25 °C erhalten. Der Hydroxylgruppengehalt dieses Produktes betrug 8,76 % und das Wasserstoffäquivalent 165.

5) 146 g sekundäres Butylamin (2 Mol) wurden unter Rühren mit 160 g Phenol (1,7 Mol) versetzt und 164 g Formaldehyd (36,5 %ig) (2 Mol) innerhalb von 40 Minuten bei 25-35 °C zugetropft. Dann wurde 5 Stunden bei 40-45 °C gerührt, auf Raumtemperatur abgekühlt und der Ansatz in einen Scheidetrichter übergeführt. Die Phasen wurden getrennt und die Harzphase 1 Stunde bei 80 °C unter einem Vakuum von 40 bis 65 mbar gehalten, wobei restliches Wasser und überschüssiges Amin abdestillierten. Es wurden 302 g Mannich-Base (91,5 % d. Th.) mit einer Viskosität von 695 mPa·s bei 25 °C erhalten. Der Hydroxylgruppengehalt dieses Produktes betrug 8,76 % und das Wasserstoffäquivalent 165.

6) 170 g N-Methylen-t-butylamin (2 Mol) wurden unter Rühren mit 374 g Nonylphenol (1,7 Mol) versetzt, auf 50-55 °C erwärmt und 2 Stunden bei dieser Temperatur gehalten. Dann wurde auf 80 °C geheizt. Nach einer Stunde wurde Vakuum angelegt und eine weitere Stunde bei 80 °C und 40 bis 65 mbar belassen, um restliches Amin und überschüssiges Wasser abzudestillieren. Die Ausbeute betrug 521 g (95,8 % d. Th.) und die Viskosität der Mannich-Base lag bei 5 800 mPa·s ; Wasserstoffäquivalent 272 ; Gehalt an phenolischem Hydroxyl 5,32 %.

7) 165 g (1 Äquivalent, bezogen auf den theoretischen N-Gehalt) der t-Butylamin-Mannich-Base gemäß Beispiel 1b) wurden unter Rühren mit 136 g m-Xylylendiamin (1 Mol) versetzt und auf 70 °C erwärmt. Dann wurden innerhalb von 20 Minuten 82 g Formaldehyd (36,5 %ig) (1 Mol) zugetropft, 1 Stunde bei 70-80 °C gehalten, Vakuum angelegt und nach Erreichen von 40 bis 65 mbar auf 110 °C geheizt. Es wurde 1 Stunde bei 105-110 °C gehalten, wobei 66 g Wasser überdestillierten. Die gebildete Mannich-Base hatte einen phenolischen Hydroxylgruppengehalt von 4,62 %, ein Wasserstoffäquivalent von 78,3 und eine Viskosität von 16 350 mPa·s.

8) 165 g der t-Butylamin-Mannich-Base gemäß Beispiel 1b) wurden unter Rühren mit 146 g Triäthylentetramin versetzt und auf 132 °C erwärmt. Dabei trat die Destillation von t-Butylamin ein, das in einem auf 0 °C gekühlten Intensivkühler kondensiert wurde. Innerhalb von 1 1/2 Stunden erhöhte sich die Temperatur auf 150 °C. Die Destillatmenge betrug 67 g (92 % d. Th.). Die Mannich-Base hatte einen phenolischen Hydroxylgruppengehalt von 6,1 %, ein Wasserstoffäquivalent von 47,6 und eine Viskosität von 15 000 mPa·s.

9) 165 g der t-Butylamin-Mannich-Base gemäß Beispiel 1b) wurden unter Rühren mit 170 g 3-Aminomethyl-3,5,5-trimethylcyclohexylamin versetzt und auf 126 °C erwärmt. Dabei trat die Destillation

von t-Butylamin ein, das in einem auf 0 °C gekühlten Intensivkühler kondensiert wurde. Die Temperatur des Ansatzes stieg innerhalb von 1 Stunde von 126 °C auf 140 °C und wurde bei 140-145 °C 3 Stunden gehalten. Die Destillatmenge betrug 69 g t-Butylamin (94,5 % d. Th.). Die viskose Mannich-Base hatte einen phenolischen Hydroxylgruppengehalt von 5,51 % und ein Wasserstoffäquivalent von 87,4.

V1 = Vergleich (älteres Recht = Anmeldung 81 10 4829.7)

465 g phenolfreies Dimethylaminomethylphenol, 7,10 mVal N/g und 6,20 mVal OH/g enthaltend, wurden in 581 g Toluol gelöst und 19 Stunden lang mit 392 g m-Xylylendiamin am Rückfluß erhitzt. Das Mol-Verhältnis Dimethylaminomethylphenol/m-Xylylendiamin entsprach 1 : 0,87. Das durch m-Xylylendiamin verdrängte Dimethylamin wurde in Wasser aufgefangen. Nach Abspaltung von ca. 90 % der theoretischen Dimethylamin-Menge wurde das Reaktionsgemisch filtriert und durch Destillation unter vermindertem Druck von ca. 25 mbar vom Toluol befreit. Man erhielt eine phenolfreie, viskose Mannich-Base mit einem Gehalt an phenolischen OH-Gruppen von 6,59 % und einem Wasserstoffäquivalent von 86.

V2 = Vergleich (Stand der Technik)

435 g phenolfreies Dimethylaminomethylphenol, 7,10 mVal N/g und 6,20 mVal OH/g enthaltend, wurden in 375 g Toluol gelöst und 18 Stunden mit 180 g Äthylendiamin am Rückfluß erhitzt. Das Mol-Verhältnis Dimethylaminomethylphenol/Äthylendiamin entsprach 1 : 1. Das durch Äthylendiamin verdrängte Dimethylamin wurde in Wasser aufgefangen. Nach Abspaltung von ca. 92 % der theoretischen Dimethylamin-Menge wurde das Reaktionsgemisch filtriert und durch Destillation unter vermindertem Druck von ca. 25 mbar vom Toluol befreit. Man erhielt eine phenolfreie, viskose Mannich-Base mit einem Gehalt an phenolischen OH-Gruppen von 9,32 und einem Wasserstoffäquivalent von 53,3.

V3 = Vergleich (Stand der Technik)

163 g phenolfreies Dimethylaminomethylphenol, 7,10 mVal N/g und 6,20 mVal OH/g enthaltend, wurden in 150 g Toluol gelöst, 19 Stunden lang mit 146 g Triäthylentetramin unter Rückfluß erhitzt. Das Mol-Verhältnis Dimethylaminomethylphenol/Triäthylentetramin entsprach 1 : 1. Das durch Triäthylentetramin verdrängte Dimethylamin wurde in Wasser aufgefangen. Nach Abspaltung von ca. 91 % der theoretischen Dimethylamin-Menge wurde das Reaktionsgemisch filtriert und durch Destillation unter vermindertem Druck von ca. 25 mbar vom Toluol befreit.

Man erhielt eine phenolfreie, viskose Mannich-Base mit einem Gehalt an phenolischen OH-Gruppen von 6,58 % und einem Wasserstoffäquivalent von 53.

Vergleichsversuche 10 bis 13

In einer Versuchsserie wurden unter den gleichen Bedingungen folgende phenolfreie bzw. phenolarme Mannich-Basen auf ihre Chemikalienbeständigkeit untersucht :

10 = Mannich-Base gemäß Beispiel 2a.
V11 = Vergleich : Mannich-Base gemäß Vergleichs-Beispiel V1.
V12 = Vergleich : Mannich-Base gemäß Vergleichs-Beispiel V2.
V13 = Vergleich : Mannich-Base gemäß Vergleichs-Beispiel V3.

Herstellung der Beschichtungen

100 g eines niedrigmolekularen Diphenylolpropan-Diglycidyläthers mit einer Viskosität von ca. 9 000 mPa·s (25 °C) und einem Epoxidäquivalentgewicht von 185 wurden mit 8 g Titandioxid vom Rutiltyp und 8 g Eisenoxid-schwarz unter Zuhilfenahme von 1 g eines mit i-Butanol verätherten Harnstoff-Formaldehydharzes und 0,5 g eines als Verlaufmittel geeigneten Siliconöls angerieben.

Auf entfetteten und entrosteten Eisenblechen (8 × 5 × 0,2 cm) wurden Beschichtungen aus dem pigmentierten Epoxidharz und der Mannich-Base gemäß Beispiel 2a bzw. ihren Lösungen in m-Xylylendiamin als Härtungsmittel aufgetragen, wobei Epoxidharz und Härtungsmittel entsprechend ihrem Epoxydäquivalent und Wasserstoffäquivalentgewicht gemischt wurden. Zur besseren Vermischung wurden die Härtungsmittel, wenn notwendig, mit Äthylalkohol oder anderen geeigneten Alkoholen auf ca. 5 000 mPa·s (25 °C) verdünnt. Die Beschichtung wurde dreimal allseitig im Abstand von je 24 Stunden aufgetragen, so daß eine Schichtstärke von etwa 500 µm resultierte.

Diese beschichteten Bleche wurden nach einer Durchhärtungszeit von 14 Tagen in verschiedenen Medien zur Prüfung der Chemikalienbeständigkeit gelagert. Die Veränderungen der Filme wurde täglich beobachtet.

Die Ergebnisse sind nachstehenden Tabellen zu entnehmen. d bedeutet Tag.

Prüfung der Chemikalienbeständigkeit

| Behandlung mit | Beispiel 10 | V11 | V12 | V13 |
|---|---|---|---|---|
| Essigsäure 5 % | geringer Filmangriff nach 16d, stärkerer Filmangriff nach 70d | geringer Filmangriff nach 14d, stärkerer Filmangriff nach 65d | starker Filmangriff nach 3d, Filmzerstörung nach 15d | starker Filmangriff nach 3d, Filmzerstörung nach 16d |
| Milchsäure 5 % | geringer Filmangriff nach 36d, stärkerer Filmangriff nach 75d | geringer Filmangriff nach 25d, stärkerer Filmangriff nach 70d | starker Filmangriff nach 7d, Filmzerstörung nach 25d | starker Filmangriff nach 8d, Filmzerstörung nach 28d |
| Schwefelsäure 78 % | sofortige Oberflächenverfärbung, nach 35d Ausbildung einer Oxydations-Schutzschicht | sofortige Oberflächenverfärbung, nach 30d Ausbildung einer Oxydations-Schutzschicht | sofortige Oberflächenverfärbung, nach 20d Ausbildung einer Oxydations-Schutzschicht | sofortige Oberflächenverfärbung, nach 20d Ausbildung einer Oxydations-Schutzschicht |
| Salpetersäure 20 % | Oberflächenverfärbung nach 8d, kein weiterer Filmangriff | Oberflächenverfärbung nach 7d, kein weiterer Filmangriff | Oberflächenverfärbung nach 5d, kein weiterer Filmangriff | Oberflächenverfärbung nach 6d, kein weiterer Filmangriff |
| Phosphorsäure 40 % | Oberflächenverfärbung nach 8d, geringer Filmangriff nach 18d, stärkerer nach 60d | Oberflächenverfärbung nach 6d, geringer Filmangriff nach 15d, stärkerer nach 50d | Oberflächenverfärbung nach 6d, geringer Filmangriff nach 10d, stärkerer nach 40d | Oberflächenverfärbung nach 7d, geringer Filmangriff nach 7d, stärkerer nach 35d |

Prüfung der Chemikalienbeständigkeit (Fortsetzung)

| Behandlung mit | Beispiel 10 | V11 | V12 | V13 |
|---|---|---|---|---|
| Methyläthylketon | geringer Filmangriff nach 2d, starker Filmangriff nach 14d | geringer Filmangriff nach 2d, starker Filmangriff nach 13d | geringer Filmangriff nach 2d, starker Filmangriff nach 6d | geringer Filmangriff nach 1d, starker Filmangriff nach 5d |
| Äthylalkohol, vergällt 96 % | kein Filmangriff innerhalb von 90d | kein Filmangriff innerhalb von 90d | Filmerweichung nach 50d | Filmerweichung nach 35d |

Aus den Vergleichs-Versuchen 10 bis 13 V ist zu ersehen, daß die Chemikalienbeständigkeit, insbesondere gegenüber organischen Säuren, der erfindungsgemäßen Mannich-Basen gegenüber dem Stand der Technik der Vergleichsbeispiele 12V und 13V erheblich verbessert ist und selbst besser ist als die der Mannich-Base gemäß Vergleichsbeispiel 11V.

14) 85 g Cyclopentylamin (1 Mol) wurden unter Rühren mit 80 g Phenol (0,85 Mol) versetzt und 82 g Formaldehyd (36,5 %ig) (1 Mol) innerhalb von 30 Minuten bei 35 °C zugetropft. Dann wurde 5 Stunden bei 35-40 °C gerührt, auf Raumtemperatur abgekühlt und der Ansatz in einen Scheidetrichter übergeführt. Die Phasen wurden getrennt und die Harzphase 1 Stunde unter einem Vakuum von 40-70 mbar gehalten, wobei restliches Wasser und überschüssiges Amin abdestillierte. Es wurden 160 g Mannich-Base (90,3 % d. Th.) mit einer Viskosität von 2 717 mPa·s bei 25 °C erhalten. Das Produkt hatte einen phenolischen Hydroxylgruppengehalt von 8,16 % und ein Wasserstoffäquivalent von 177.

15) 100,7 g N-Methylen-t-butylamin (1,18 Mol) gemäß Beispiel 1 a wurden unter Rühren mit 109 g o-Kresol (1,01 Mol) versetzt, wobei eine exotherme Reaktion einsetzte. Durch Kühlen wurde die Temperatur bei 60 °C gehalten. Nach Abklingen der Wärmetönung wurd das Gemisch durch zusätzliche Heizung 2 Stunden auf 55-60 °C gehalten. Dann wurde auf 80 °C erwärmt, 1 Stunde bei dieser Temperatur gehalten und 40 Minuten ein Vakuum von 40-70 mbar angelegt. Dabei destillierten Wasser und überschüssiges Amin ab. Es wurden 192,5 g Mannich-Base mit einer Viskosität von 44 mPa·s bei 25 °C erhalten. Das Produkt hatte einen phenolischen Hydroxylgruppengehalt von 8,16 % und ein Wasserstoffäquivalent von 177.

16) 85 g N-Methylen-t-butylamin (1 Mol) gemäß Beispiel 1 a wurden unter Rühren mit 94 g Phenol (1 Mol) versetzt, auf 50-55 °C erwärmt und 2 Stunden bei dieser Temperatur gehalten. Dann wurde auf 80 °C geheizt, 1 Stunden bei dieser Temperatur belassen, auf 50 °C heruntergekühlt und weitere 42,5 g N-Methylen-t-butylamin (0,5 Mol) zugegeben. Nun wurden 55 g Resorcin (0,5 Mol) innerhalb von 10 Minuten portionsweise zugesetzt, wobei eine exotherme Reaktion einsetzte. Durch Kühlung wurde der Temperaturanstieg auf 70 °C begrenzt. 1 Stunde nach Beginn der Resorcinzugabe, nach Abklingen der Wärmetönung, wurde auf 80 °C erwärmt und 1 Stunde bei dieser Temperatur gehalten. Durch Anlegen eines Vakuums von 40-70 mbar für etwa 1 Stunde wurden Wasser und überschüssiges Amin entfernt. Die viskose Mannich-Base hatte einen phenolischen Hydroxylgruppengehalt von 12,3 % und ein Wasserstoffäquivalent von 184.

17) 153 g N-Methylen-t-butylamin (1,8 Mol) gemäß Beispiel 1 a wurden unter Rühren mit 169 g Phenol (1,8 Mol) versetzt, auf 50-55 °C erwärmt und 2 Stunden bei dieser Temperatur gehalten. Dann wurde auf 80 °C geheizt, 1 Stunde bei dieser Temperatur belassen, auf 55 °C heruntergekühlt und weitere 17 g N-Methylen-t-butylamin (0,2 Mol) zugegeben. Nun wurden 27,6 g Salicylsäure (0,2 Mol) zugesetzt und innerhalb von 50 Minuten auf 120 °C erwärmt. Nach 1 Stunde bei dieser Temperatur war die Salicylsäure gelöst. Nach Abkühlung auf 80 °C wurde für 20 Minuten ein Vakuum von 40-70 mbar angelegt. Die Mannich-Base hatte eine Viskosität von 14 300 mPa·s Ausbeute 347 g (94,6 % d. Th.). Phenolischer Hydroxylgruppengehalt 9,28 % ; Wasserstoffäquivalent 183.

**Patentansprüche** (für die Vertragsstaaten : BE, CH, DE, GB, LI, NL)

1. Verwendung von Mannich-Basen der allgemeinen Formel

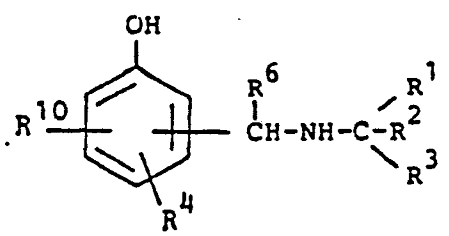

(I)

als Vernetzungsmittel von Epoxidharzen zur Herstellung von Formkörpern, wobei in Formel (I) $R^{10}$ Wasserstoff oder die Gruppe

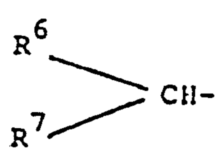

darstellt, wobei $R^1$ bis $R^3$ gleiche oder verschiedene Alkylreste mit jeweils 1 bis 5 C-Atomen darstellen, wobei jedoch einer der Reste R' bis $R^3$ auch Wasserstoff sein kann und in diesem Fall die beiden anderen zusammen einen Alkylenrest von 4 bis 6 C-Atomen darstellen können, die jeweils durch eine für die Bildung der Mannich-Base und die Epoxidhärtungsreaktion inerte Gruppe wie —OH oder —$OR^5$ substituiert sein können, $R^4$ H—, HO—, HOOC— oder Alkyl mit 1 bis 9 C-Atomen, $R^5$ Alkyl mit 1 bis 5 C-Atomen, $R^6$ Wasserstoff oder Alkyl mit 1 bis 4 C-Atomen und $R^7$ einen der folgenden Reste (II) bis (XII) bedeutet :

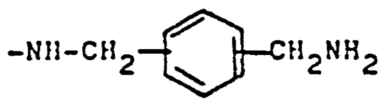 (II)

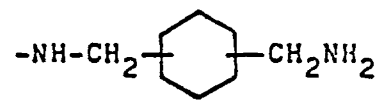 (III)

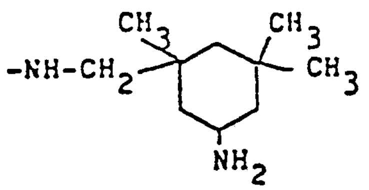

(IV)

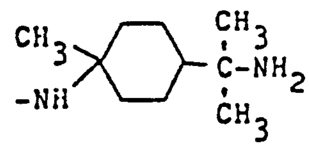

(V)

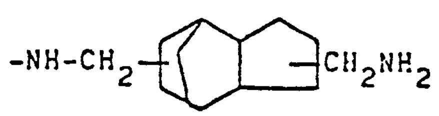 (VI)

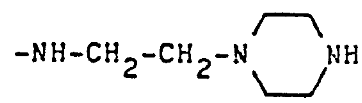 (VII)

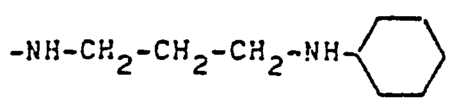

(VIII)

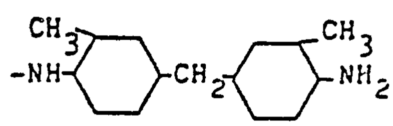

(IX)

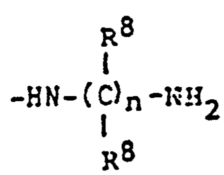 (X) ,

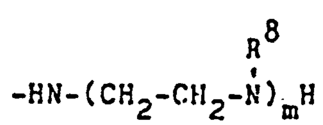 (XI) und

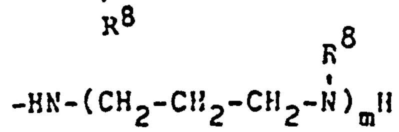 (XII)

worin in Formel (X) n eine ganze Zahl von 2 bis 6 und in Formeln (XI) bis (XII) m eine ganze Zahl von 1 bis 4 und $R^8$ H— oder $CH_3$— bedeutet und höchstens 50 %, vorzugsweise höchstens 25 % der Reste $R^8CH_3$ sind.

2. Ausführungsform nach Anspruch 1, dadurch gekennzeichnet, daß die Mannich-Basen gemäß Formel (I) in einem Anteil von 5 bis 90, vorzugsweise 5 bis 30 Gew.-% zusammen mit Mannich-Basen der Formel

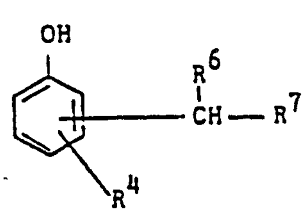 (XIII)

verwendet werden, wobei die Mannich-Basen der Formel (XIII) in einem Anteil von 10 bis 95, vorzugsweise von 70 bis 95 Gew.-% vorliegen und $R^4$, $R^6$ und $R^7$ die im Anspruch 1 angegebene Bedeutung haben.

3. Ausführungen nach Anspruch 1 oder 2, dadurch gekennzeichnet, daß die Mannich-Basen der allgemeinen Formel (I) in einer Menge verwendet werden, die den Epoxid-Gruppen äquivalent ist oder einem Unter- oder Überschuß von bis zu 50 Mol-% entspricht.

4. Verfahren zur Herstellung von Mannich-Basen der Formel (I), dadurch gekennzeichnet, daß man

a) primäre Monoamine der allgemeinen Formel

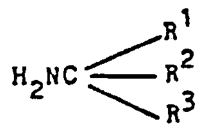

(XIV)

mit Aldehyden der allgemeinen Formel $R^6HCO$ und danach oder gleichzeitig mit Phenolen der allgemeinen Formel

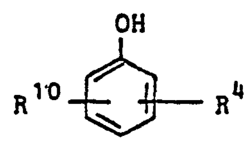

(XV)

bei Temperaturen von 20 bis 200 °C, bevorzugt 50 bis 150 °C, im Molverhältnis Monoamin : Aldehyd : Phenol von etwa 1 : 1 : (0,7-1), vorzugsweise 1 : 1 : (0,8-0,95), umsetzt, wobei $R^1$ bis $R^6$ die im Anspruch 1 genannte Bedeutung haben, $R^{10}$ jedoch H bedeutet, oder daß man

b) zur Herstellung von Mannich-Basen der Formel (I), in der $R^{10}$

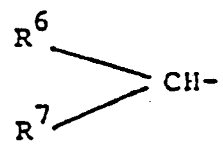

ist und $R^1$ bis $R^7$ die im Anspruch 1 genannte Bedeutung haben, Mannich-Basen mit der allgemeinen Formel (I), in der $R^1$ bis $R^6$ die schon genannte Bedeutung haben, $R^{10}$ jedoch Wasserstoff ist, mit Aldehyden der allgemeinen Formel $R^6HCO$ und Polyaminen der Formel $HR^7$ bei Temperaturen von 20 bis 200 °C, bevorzugt 70 bis 150 °C umsetzt, wobei $R^7$ einen der Reste (II) bis (XII) bedeutet und das Molverhältnis Mannich-Base : Aldehyd : Polyamin etwa 1 : 1 : 1 beträgt

und daß man nach beiden Arbeitsweisen das Reaktionsprodukt nach erfolgter Umsetzung von Wasser und nicht umgesetzten Reaktionspartnern befreit.

5. Verfahren zur Herstellung von Mannich-Basen der allgemeinen Formel (XIII) wie im Anspruch 2 angegeben, dadurch gekennzeichnet, daß man Mannich-Basen mit der allgemeinen Formel (I), in der $R^1$ bis $R^6$ die im Anspruch 1 genannte Bedeutung haben, $R^{10}$ jedoch H bedeutet, mit Polyaminen der Formel $HR^7$ bei Temperaturen von 20 bis 200 °C, bevorzugt 50 bis 150 °C umsetzt, wobei $R^7$ einen der Reste (II) bis (XII) bedeutet und das Molverhältnis Mannich-Base : Polyamin von 2 : 1 bis 1 : 1 beträgt und Amin der allgemeinen Formel (XIV) abgespalten wird, worin $R^1$ und $R^3$ die schon genannte Bedeutung haben.

6. Ausführungsform nach einem oder mehreren der Ansprüche 1 bis 5, dadurch gekennzeichnet, daß die Reste $R^1$ bis $R^7$ folgende Bedeutung haben : $R^1$ bis $R^3$ sind jeweils Alkyl mit 1 bis 3 Kohlenstoffatomen, das unsubstituiert ist ; $R^4$ ist Wasserstoff oder Alkyl mit 1 bis 9 Kohlenstoffatomen ; $R^6$ ist Wasserstoff und $R^7$ der Rest des Xylylendiamins oder des Triäthylentetramins.

**Patentansprüche** (für den Vertragsstaat AT)

1. Verfahren zum Herstellen von Formkörpern und Überzügen durch Umsetzen von Epoxydverbindungen mit mehr als einer 1,2-Epoxydgruppe pro Molekül, die sich gegebenenfalls im Gemisch mit Monoepoxyden befinden, mit substituierten Aminen, wobei man als substituierte Amine Mannich-Basen der allgemeinen Formel

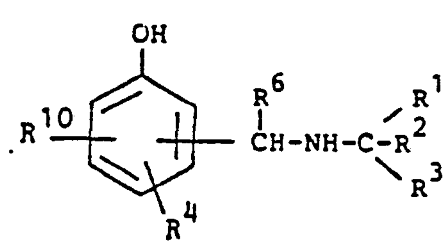

(I)

einsetzt, wobei in Formel (I) $R^{10}$ Wasserstoff oder die Gruppe

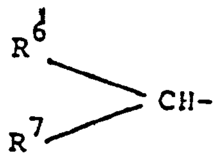

darstellt, $R^1$ bis $R^3$ gleiche oder verschiedene Alkylreste mit jeweils 1 bis 5 C-Atomen darstellen, wobei jedoch einer der Reste $R^1$ bis $R^3$ auch Wasserstoff sein kann und in diesem Fall die beiden anderen zusammen einen Alkylenrest von 4 bis 6 C-Atomen darstellen können, die jeweils durch eine für die Bildung der Mannich-Base und die Epoxidhärtungsreaktion inerte Gruppe wie —OH oder —$OR^5$ substituiert sein können, $R^4$ H—, HO—, HOOC— oder Alkyl mit 1 bis 9 C-Atomen, $R^5$ Alkyl mit 1 bis 5 C-Atomen, $R^6$ Wasserstoff oder Alkyl mit 1 bis 4 C-Atomen und $R^7$ einen der folgenden Reste (II) bis (XII) bedeutet :

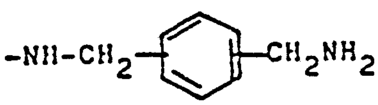 (II)

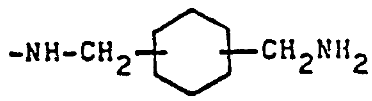 (III)

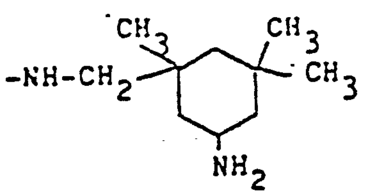

(IV)

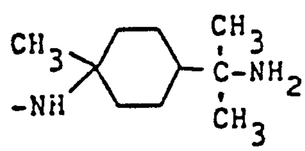

(V)

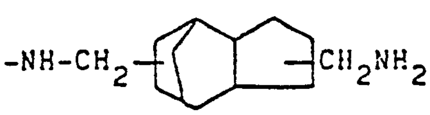 (VI)

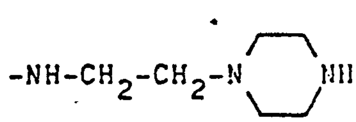 (VII)

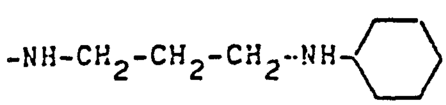

(VIII)

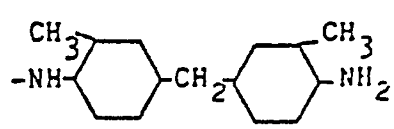

(IX)

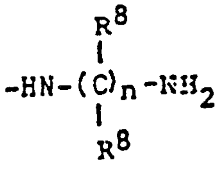 (X),

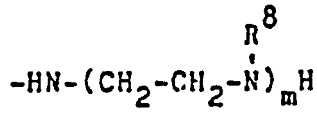 (XI) und

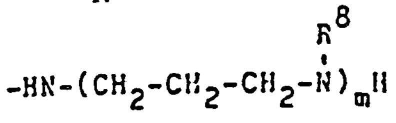 (XII)

worin in Formel (X) n eine ganze Zahl von 2 bis 6 und in Formeln (XI) bis (XII) m eine ganze Zahl von 1 bis 4 und $R^8$ H— oder $CH_3$— bedeutet und höchstens 50 %, vorzugsweise höchstens 25 % der Reste $R^8CH_3$ sind.

2. Verfahren zur Herstellung von Mannich-Basen der allgemeinen Formel

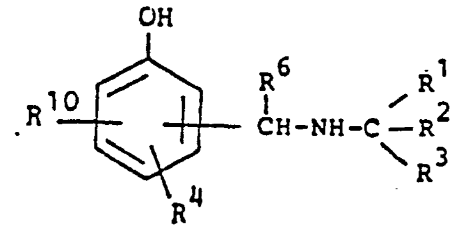 (I)

in der $R^1$ bis $R^{10}$ die im Anspruch 1 angegebene Bedeutung haben, dadurch gekennzeichnet, daß man

a) primäre Monoamine der allgemeinen Formel

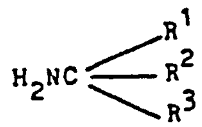 (XIV)

mit Aldehyden der allgemeinen Formel $R^6HCO$ und danach oder gleichzeitig mit Phenolen der allgemeinen Formel

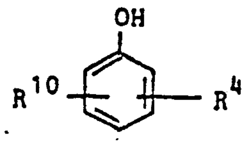 (XV)

bei Temperaturen von 20 bis 200 °C, bevorzugt 50 bis 150 °C, im Molverhältnis Monoamin : Aldehyd : Phenol von etwa 1 : 1 : (0,7-1), vorzugsweise 1 : 1 : (0,8-0,95), umsetzt, wobei $R^1$ bis $R^6$ die im Anspruch 1 genannte Bedeutung haben, $R^{10}$ jedoch H bedeutet, oder daß man

b) zur Herstellung von Mannich-Basen der Formel (I), in der $R^{10}$

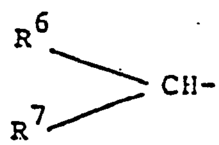

ist und $R^1$ bis $R^7$ die im Anspruch 1 genannte Bedeutung haben, Mannich-Basen mit der allgemeinen Formel (I), in der $R^1$ bis $R^6$ die schon genannte Bedeutung haben, $R^{10}$ jedoch Wasserstoff ist, mit Aldehyden der allgemeinen Formel $R^6HCO$ und Polyaminen der Formel $HR^7$ bei Temperaturen von 20 bis 200 °C, bevorzugt 70 bis 150 °C umsetzt, wobei $R^7$ einen der Reste (II) bis (XII) bedeutet und das Molverhältnis Mannich-Base : Aldehyd : Polyamin etwa 1 : 1 : 1 beträgt

und daß man nach beiden Arbeitsweisen das Reaktionsprodukt nach erfolgter Umsetzung von Wasser und nicht umgesetzten Reaktionspartnern befreit.

3. Ausführungsform nach Anspruch 1, dadurch gekennzeichnet, daß die nach dem Verfahren des Anspruchs 2 hergestellten Mannich-Basen in einem Anteil von 5 bis 90, vorzugsweise 5 bis 30 Gew.-% zusammen mit Mannich-Basen der Formel

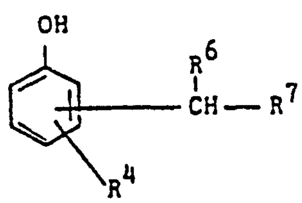 (XIII)

verwendet werden, wobei die Mannich-Basen der Formel (XIII) in einem Anteil von 10 bis 95, vorzugsweise von 70 bis 95 Gew.-% vorliegen, und $R^4$, $R^6$ und $R^7$ die im Anspruch 1 angegebene Bedeutung haben.

4. Ausführungsform nach Anspruch 1 oder 3, dadurch gekennzeichnet, daß die Mannich-Basen der allgemeinen Formel (I) in einer Menge verwendet werden, die den Epoxid-Gruppen äquivalent ist oder einem Unter- oder Überschuß von bis zu 50 Mol-% entspricht.

5. Verfahren zur Herstellung von Mannich-Basen der allgemeinen Formel (XIII) wie im Anspruch 3 angegeben, dadurch gekennzeichnet, daß man Mannich-Basen mit der allgemeinen Formel (I), in der $R^1$ bis $R^6$ die im Anspruch 1 genannte Bedeutung haben, $R^{10}$ jedoch H bedeutet, mit Polyaminen der Formel $HR^7$ bei Temperaturen von 20 bis 200 °C, bevorzugt 50 bis 150 °C umsetzt, wobei $R^7$ einen der Reste (II) bis (XII)

bedeutet und das Molverhältnis Mannich-Base : Polyamin von 2 : 1 bis 1 : 1 beträgt und Amin der allgemeinen Formel (XIV) wie im Anspruch 2 angegeben abgespalten wird, worin $R^1$ bis $R^3$ die schon genannte Bedeutung haben.

6. Ausführungsform nach einem oder mehreren der Ansprüche 1 bis 5, dadurch gekennzeichnet, daß die Reste $R^1$ bis $R^7$ folgende Bedeutung haben : $R^1$ bis $R^3$ sind jeweils Alkyl mit 1 bis 3 Kohlenstoffatomen, das unsubstituiert ist ; $R^4$ ist Wasserstoff oder Alkyl mit 1 bis 9 Kohlenstoffatomen ; $R^6$ ist Wasserstoff und $R^7$ der Rest des Xylylendiamins oder des Triäthylentetramins.

**Claims** (for the Contracting States : BE, CH, DE, GB, LI, NL)

1. Use of Mannich-bases of the general formula

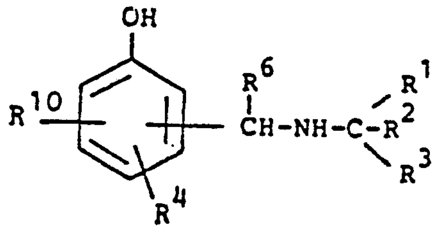

(I)

as cross-linking agents for epoxy resins for the production of shaped articles, in which in formula (I) $R^{10}$ is hydrogen or the group

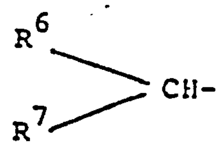

in which $R^1$ to $R^3$ represent identical or different alkyl radicals having 1 to 5 carbon atoms each, it also being possible, however, for one of the radicals $R^1$ to $R^3$ to be hydrogen, and, in this case, for the other two radicals together to represent an alkylene radical of 4 to 6 carbon atoms, each of which can be substituted by a group such as —OH or —$OR^5$, which is inert with respect to the formation of the Mannich-base and to the epoxide hardening reaction, $R^4$ denotes H—, HO—, HOOC— or alkyl radicals having 1 to 9 carbon atoms, $R^5$ denotes alkyl having 1 to 5 carbon atoms, $R^6$ is hydrogen or alkyl having 1 to 4 carbon atoms and $R^7$ is one of the following groups (II) to (XII) :

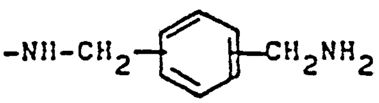 (II)

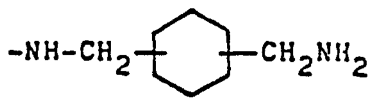 (III)

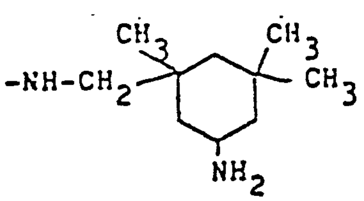

(IV)

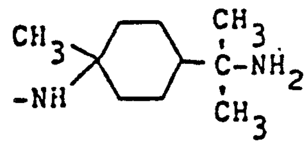

(V)

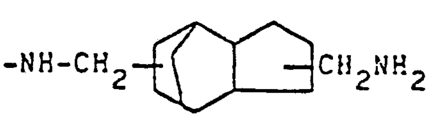 (VI)

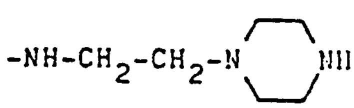 (VII)

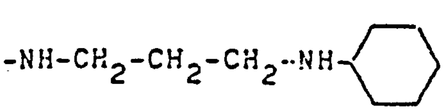

(VIII)

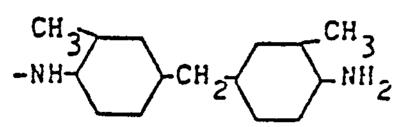

(IX)

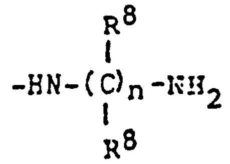 (X), 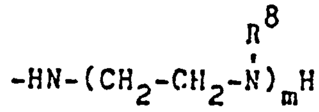 (XI) and

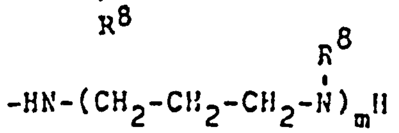 (XII)

in which in formula (X) n is an integrer from 2 to 6 and in formulae (IX) to (XII) m is an integer from 1 to 4 and in which $R^8$ is H— or $CH_3$— and wherein at most 50 %, preferably at most 25 % of the radicals $R^8$ are $CH_3$.

2. Embodiment according to claim 1, characterized in that the Mannich-bases according to formula (I) are used in an amount of 5 to 90, preferably 5 to 30 % by weight together with Mannich-bases of the formula

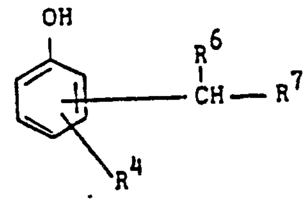 (XIII)

in which the Mannich-bases of the formula (XIII) are present in an amount of 10 to 95, preferably of from 70 to 95 % by weight and in which $R^4$, $R^6$ and $R^7$ have the meaning as defined in claim 1.

3. Embodiment according to claim 1 or 2, characterized in that the Mannich-bases of the general formula (I) are used in an amount which is equivalent to the epoxy groups, or is less than the equivalent amount or in excess thereof by up to 50 mole-%.

4. A process for the preparation of Mannich-bases of the formula (I), characterised in that

a) primary monoamines of the general formula

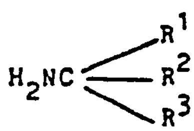 , (XIV)

are reacted with aldehydes of the general formula $R^6HCO$ and subsequently or simultaneously with phenoles of the general formula

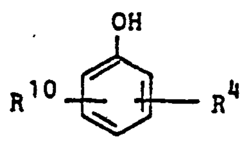 (XV)

at temperatures of from 20 to 200 °C, preferably 50 to 150 °C, in the molar ratio of monoamine : aldehyde : phenole of about 1 : 1 : (0.7-1), preferably 1 : 1 : (0.8-0.95), $R^1$ to $R^6$ having the meaning mentioned in claim 1, but $R^{10}$ denoting H or

b) for the preparation of Mannich-bases of the formula (I) in which $R^{10}$ is

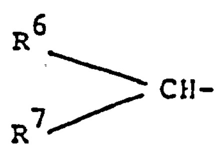

and $R^1$ to $R^7$ have the meaning mentioned in claim 1, reacting Mannich-bases with the general formula (I) in which $R^1$ to $R^6$ have the meaning already mentioned, but $R^{10}$ is hydrogen, with aldehydes of the general formula $R^6HCO$ and polyamines of the formula $HR^7$ at temperatures of from 20 to 200 °C, preferably 70 to 150 °C, $R^7$ denoting one of the radicals (II) to (XII) and the molar ratio of Mannich-base : aldehyde : polyamine being about 1 : 1 : 1, and after both procedures freeing the reaction product of water and unreacted reactants after the reaction is complete.

5. A process for the preparation of Mannich-bases of the general formula (XIII) as mentioned in claim 2, characterized in that Mannich-bases of the general formula (I), in which $R^1$ to $R^6$ have the meaning mentioned in claim 1, but $R^{10}$ denotes H, are reacted with polyamines of formula $HR^7$ at temperatures of from 20 to 200 °C, preferably 50 to 150 °C, $R^7$ denotes one of the radicals (II) to (XII) and the molar ratio of

Mannich-base : polyamine being 2 : 1 to 1 : 1 and the amine of the general formula (XIV) wherein $R^1$ to $R^3$ have the meaning already mentioned, being split off.

6. Embodiment according to one or more of the claims 1 to 5, characterized in that the radicals $R^1$ to $R^7$ have the following meaning : $R^1$ to $R^3$ are each alkyl 1 to 3 carbon atoms and which is unsubstituted ; $R^4$ is hydrogen or alkyl with 1 to 9 carbon atoms ; $R^6$ is hydrogen and $R^7$ is the radical of xylylene diamine or of triethylene tetramine.

**Claims** (for the Contracting State AT)

1. Process for the production of shaped articles and coating by reaction of epoxide compounds having more than 1,2-epoxy groups per molecule, which optionally can be in mixture with monoepoxides, with substituted amines, as substituted amines Mannich-bases of the general formula

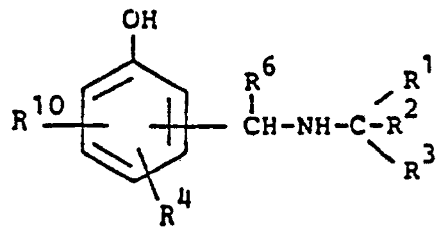
(I)

being used, in which in formula (I) $R^{10}$ is hydrogen or the group

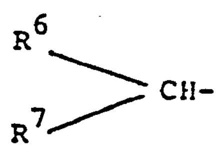

in which $R^1$ to $R^3$ represent identical or different alkyl radicals having 1 to 5 carbon atoms each, it also being possible, however, for one of the radicals $R^1$ to $R^3$ to be hydrogen, and, in this case, for the other two radicals together to represent an alkylene radical of 4 to 6 carbon atoms, each of which can be substituted by a group such as —OH or —$OR^5$, which is inert with respect to the formation, of the Mannich-base and to the epoxide hardening reaction, $R^4$ denotes H—, HO—, HOOC— or alkyl radicals having 1 to 9 carbon atoms, $R^5$ denotes alkyl having 1 to 5 carbon atoms, $R^6$ is hydrogen or alkyl having 1 to 4 carbon atoms and $R^7$ is one of the following groups (II) to (XII) :

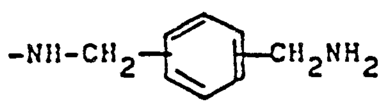
(II)

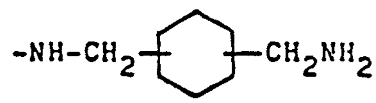
(III)

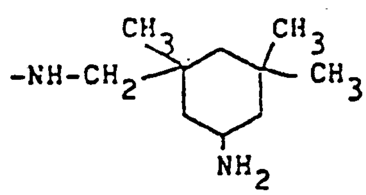
(IV)

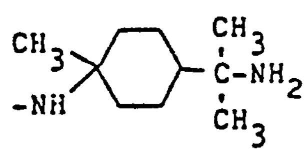
(V)

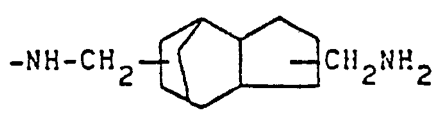
(VI)

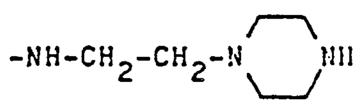
(VII)

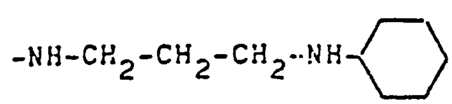
(VIII)

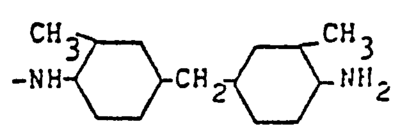
(IX)

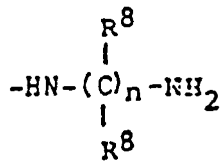 (X) , 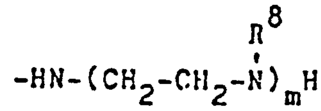 (XI) and

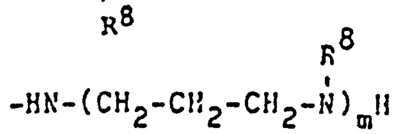 (XII)

in which in formula (X) n is an integer from 2 to 6 and in formulae (XI) to (XII) m is an integer from 1 to 4 and in which $R^8$ is H— or $CH_3$— and wherein at most 50 %, preferably at most 25 % of the radicals $R^8$ are $CH_3$.

2. A process for the preparation of Mannich-bases of the general formula I

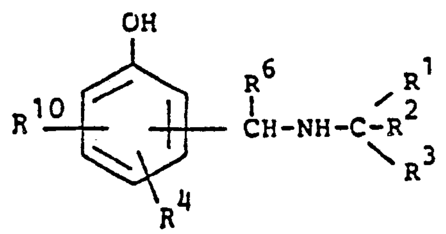 (I)

in which $R^1$ to $R^{10}$ have the meaning as defined in claim 1 characterized in that

a) primary monoamines of the general formula

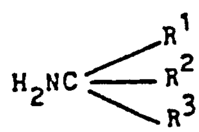 (XIV)

are reacted with aldehydes of the general formula $R^6HCO$ and subsequently or simultaneously with phenoles of the general formula

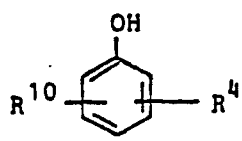 (XV)

at temperatures of from 20 to 200 °C, preferably 50 to 150 °C, in the molar ratio of monoamine : aldehyde : phenole of about 1 : 1 : (0.7-1), preferably 1 : 1 : (0.8-0.95), $R^1$ to $R^6$ having the meaning mentioned in claim 1, but $R^{10}$ denoting H or

b) for the preparation of Mannich-bases of the formula (I) in which $R^{10}$ is

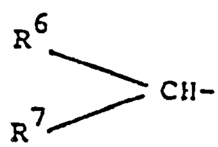

and $R^1$ to $R^7$ have the meaning mentioned in claim 1, reacting Mannich-bases with the general formula (I) in which $R^1$ to $R^6$ have the meaning already mentioned, but $R^{10}$ is hydrogen, with aldehydes of the general formula $R^6HCO$ and polyamines of the formula $HR^7$ at temperatures of from 20 to 200 °C, preferably 70 to 150 °C, $R^7$ denoting one of the radicals (II) to (XII) and the molar ratio of Mannich-base : aldehyde : polyamine being about 1 : 1 : 1, and after both procedures freeing the reaction product of water and unreacted reactants after the reaction is complete.

3. Embodiment according to claim 1, characterized in that the Mannich-bases prepared according to claim 2 are used in an amount of 5 to 90, preferably 5 to 30 % by weight together with Mannich-bases of the formula

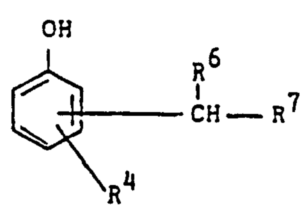 (XIII)

in which the Mannich-bases of the formula (XIII) are present in an amount of 10 to 95, preferably of from 70 to 95 % by weight and in which $R^4$, $R^6$ and $R^7$ have the meaning as defined in claim 1.

4. Embodiment according to claim 1 or 3, characterized in that the Mannich-bases of the general formula (I) are used in an amount which is equivalent to the epoxy groups, or is less than the equivalent amount or in excess thereof by up to 50 mole-%.

5. A process for the preparation of Mannich-bases of the general formula (XIII) as mentioned in claim 3, characterized in that Mannich-bases of the general formula (I), in which $R^1$ to $R^6$ have the meaning mentioned in claim 1, but $R^{10}$ denotes H, are reacted with polyamines of formula $HR^7$ at temperatures of from 20 to 200 °C, preferably 50 to 150 °C, $R^7$ denotes one of the radicals (II) to (XII) and the molar ratio of Mannich-base : polyamine being 2 : 1 to 1 : 1 and the amine of the general formula (XIV) wherein $R^1$ to $R^3$ have the meaning already mentioned, being split off as indicated in claim 2.

6. Embodiment according to one or more of the claims 1 to 5, characterized in that the radicals $R^1$ to $R^7$ have the following meaning : $R^1$ to $R^3$ are each alkyl with 1 to 3 carbon atoms and which is unsubstituted : $R^4$ is hydrogen or alkyl with 1 to 9 carbon atoms ; $R^6$ is hydrogen and $R^7$ is the radical of xylylene diamine or of triethylene tetramine.

**Revendications** (pour les Etats contractants : BE, CH, DE, GB, LI, NL)

1. Application, en tant que réticulants de résines époxydiques pour la fabrication d'objets moulés, de bases de Mannich répondant à la formule générale I

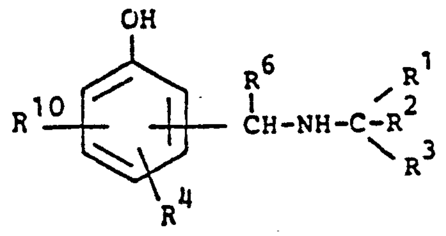

(I)

dans laquelle $R^{10}$ représente l'hydrogène ou un radical

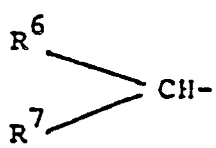

$R^1$ à $R^3$ représentent chacun, indépendamment les uns et les autres, un alkyle contenant de 1 à 5 atomes de carbone, l'un des symboles $R^1$ à $R^3$ pouvant cependant représenter aussi l'hydrogène et, dans ce cas, les deux autres pouvant former ensemble un radical alkylène contenant de 4 à 6 atomes de carbone, chacun des radicaux $R^1$ à $R^3$ pouvant porter un radical inerte à l'égard de la formation de la base de Mannich et de la réaction de durcissement des époxydes, tel qu'un radical —OH ou —$OR^5$, $R^4$ représente —H, —OH, —COOH ou un alkyle contenant de 1 à 9 atomes de carbone, $R^5$ représente un alkyle contenant de 1 à 5 atomes de carbone, $R^6$ représente l'hydrogène ou un alkyle contenant de 1 à 4 atomes de carbone et $R^7$ représente un des radicaux (II) à (XII) suivants :

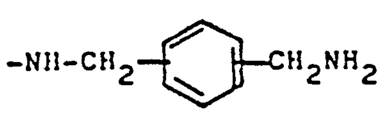

(II)

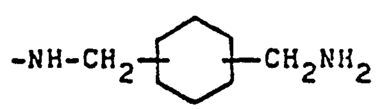

(III)

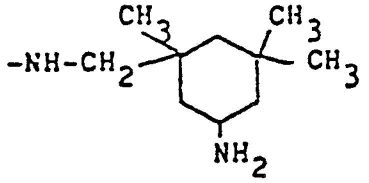

(IV)

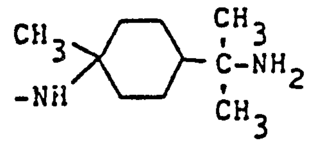

(V)

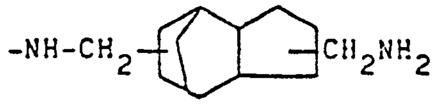

(VI)

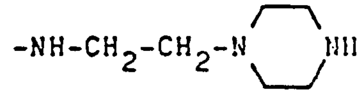

(VII)

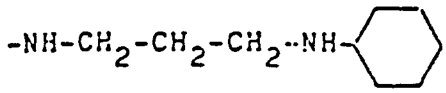

(VIII)

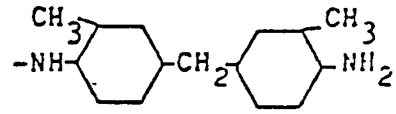

(IX)

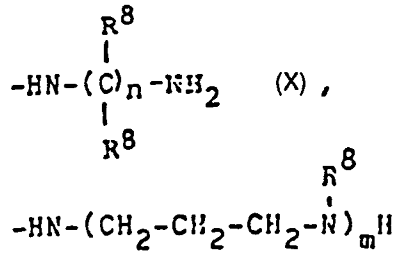

(X) ,

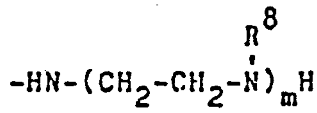

(XI) et

(XII)

formules dans lesquelles l'indice n (formule X) représente un nombre entier de 2 à 6, l'indice m (formules XI et XII) représente un nombre entier de 1 à 4, et $R^8$ représente —H ou —$CH_3$, au plus 50 %, de préférence au plus 25 %, des radicaux $R^8$ étant —$CH_3$.

2. Mode d'exécution selon la revendication 1 caractérisé en ce que les bases de Mannich de formule I sont utilisées en une proportion de 5 à 90 % en poids, de préférence de 5 à 30 % en poids, avec des bases de Mannich répondant à la formule XIII

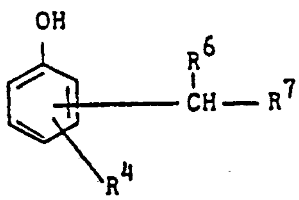

(XIII)

dans laquelle $R^4$, $R^6$ et $R^7$ ont les significations données à la revendication 1, les bases de Mannich de formule XIII étant mises en jeu en une proportion de 10 à 95 % en poids, de préférence de 70 à 95 % en poids.

3. Mode d'exécution selon l'une des revendications 1 et 2, caractérisé en ce que les bases de Mannich de formule générale I sont utilisées en une quantité qui équivaut à celle des radicaux époxy ou qui correspond à un défaut ou à un excès d'au plus 50 % en moles.

4. Procédé de préparation de bases de Mannich de formule I, procédé caractérisé en ce que

a) on fait réagir des monoamines primaires de formule générale XIV

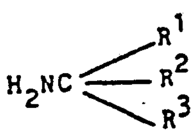

(XIV)

avec des aldéhydes de formule générale $R^6HCO$ et, ultérieurement ou simultanément, avec des phénols de formule générale XV

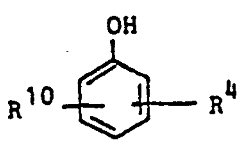

(XV)

à des températures de 20 à 200 °C, de préférence de 50 à 150 °C, la proportion molaire monoamine : aldéhyde : phénol étant d'environ 1 : 1 : (0,7-1), de préférence de 1 : 1 : (0,8-0,95) [dans les formules précédentes les symboles $R^1$ à $R^6$ ont les significations données à la revendication 1 et $R^{10}$ représente H], ou

b) lorsqu'on veut préparer des bases de Mannich de formule I dans lesquelles $R^{10}$ représente un radical

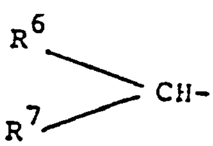

et $R^1$ à $R^7$ ont les significations données à la revendication 1, on fait réagir des bases de Mannich de formule générale I dans lesquelles $R^1$ à $R^6$ ont les significations déjà données tandis que $R^{10}$ représente l'hydrogène, avec des aldéhydes de formule générale $R^6HCO$ et des polyamines de formule $HR^7$, à des températures de 20 à 200 °C, de préférence de 70 à 150 °C, le symbole $R^7$ représentant un des radicaux (II) à (XII) et la proportion molaire base de Mannich : aldéhyde : polyamine étant d'environ 1 : 1 : 1, et, que l'on ait adopté l'un ou l'autre de ces deux modes opératoires, on élimine du produit réactionnel, lorsque la réaction a été effectuée, l'eau et les partenaires réactionnels qui n'ont pas réagi.

5. Procédé de préparation de bases de Mannich de formule générale (XIII) selon la revendication 2, procédé caractérisé en ce qu'on fait réagir des bases de Mannich de formule générale I dans lesquelles $R^1$ à $R^6$ ont les significations données à la revendication 1, et $R^{10}$ représente H, à des températures de 20 à 200 °C, de préférence de 50 à 150 °C, avec des polyamines de formule $HR^7$ dans lesquelles $R^7$ représente l'un des radicaux (II) à (XII), le rapport molaire base de Mannich : polyamine étant compris entre 2 : 1 et 1 : 1, et une amine de formule générale XIV (dans laquelle $R^1$ à $R^3$ ont les significations déjà données) étant éliminée.

6. Mode d'exécution selon l'une quelconque des revendications 1 à 5, caractérisé en ce que les symboles $R^1$ à $R^7$ ont les significations suivantes : $R^1$ à $R^3$ représentent chacun un alkyle qui contient de 1 à 3 atomes de carbone et qui ne portent pas de substituant, $R^4$ représente l'hydrogène ou un alkyle contenant de 1 à 9 atomes de carbone, $R^6$ représente l'hydrogène et $R^7$ représente le radical de la xylylène-diamine ou de la triéthylène-tétramine.

**Revendications** (pour l'Etat contractant AT)

1. Procédé pour fabriquer des objets moulés et des revêtements par réaction de composés époxydiques contenant, par molécule, plus d'un radical époxy-1,2, composés qui sont éventuellement accompagnés de mono-époxydes, avec des amines substituées, procédé selon lequel on utilise, comme amines substituées, des bases de Mannich répondant à la formule générale I

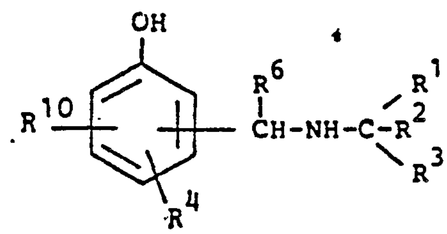

(I)

dans laquelle $R^{10}$ représente l'hydrogène ou un radical

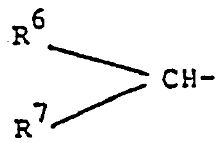

$R^1$ à $R^3$ représentent chacun, indépendamment les uns des autres, un alkyle contenant de 1 à 5 atomes de carbone, l'un des symboles $R^1$ à $R^3$ pouvant toutefois représenter aussi l'hydrogène et, dans ce cas, les deux autres pouvant former ensemble un radical alkylène contenant de 4 à 6 atomes de carbone, chacun des radicaux $R^1$ à $R^3$ pouvant porter un radical inerte à l'égard de la formation de la base de Mannich et de la réaction de durcissement des époxydes, tel qu'un radical —OH ou —$OR^5$, $R^4$ représente —H, —OH, —COOH ou un alkyle contenant de 1 à 9 atomes de carbone, $R^5$ représente un alkyle contenant de 1 à 5 atomes de carbone, $R^6$ représente l'hydrogène ou un alkyle contenant de 1 à 4 atomes de carbone et $R^7$ représente un des radicaux (II) à (XII) suivants

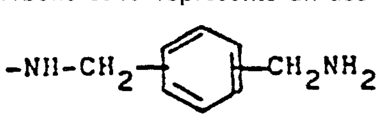

(II)

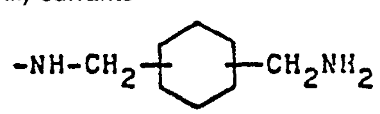

(III)

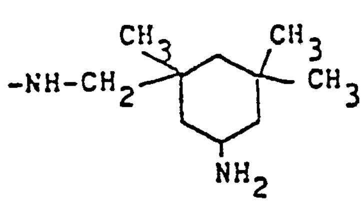

(IV)

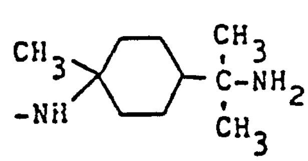

(V)

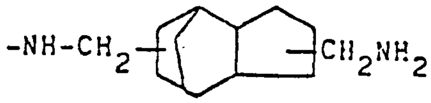 (VI) 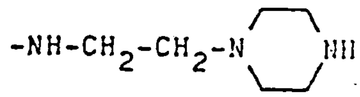 (VII)

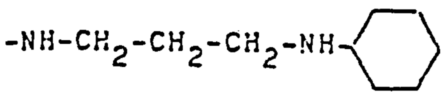

(VIII)

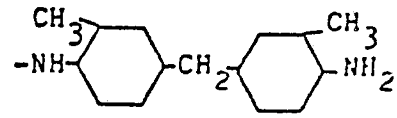

(IX)

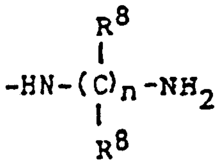 (X), 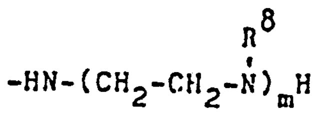 (XI) et

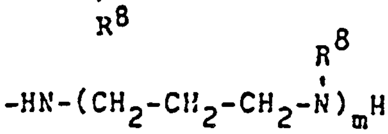 (XII)

formules dans lesquelles l'indice n (formule X) représente un nombre entier de 2 à 6, l'indice m (formules XI et XII) représente un nombre entier de 1 à 4, et $R^8$ représente —H ou —$CH_3$, au plus 50 %, de préférence au plus 25 %, des radicaux $R^8$ étant —$CH_3$.

2. Procédé de préparation de bases de Mannich répondant à la formule générale I

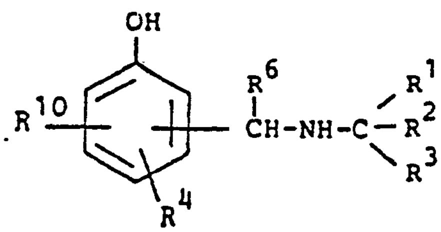

(I)

dans laquelle $R^1$ à $R^{10}$ ont les significations données à la revendication 1, procédé caractérisé en ce que

a) on fait réagir des mono-amines primaires de formule générale XIV

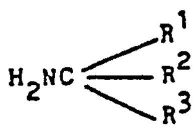

(XIV)

avec des aldéhydes de formule générale $R^6HCO$ et, ultérieurement ou simultanément, avec des phénols de formule générale XV

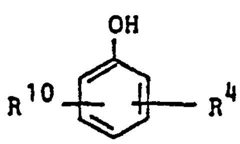

(XV)

à des températures de 20 à 200 °C, de préférence de 50 à 150 °C, la proportion molaire monoamine : aldéhyde : phénol étant d'environ 1 : 1 : (0,7-1), de préférence de 1 : 1 : (0,8-0,95) [dans les formules précédentes les symboles $R^1$ à $R^6$ ont les significations données à la revendication 1 et $R^{10}$ représente H], ou

b) lorsqu'on veut préparer des bases de Mannich de formule I dans lesquelles $R^{10}$ représente un radical

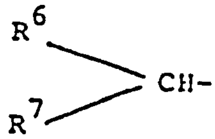

et $R^1$ à $R^7$ ont les significations données à la revendication 1, on fait réagir des bases de Mannich de formule générale I dans lesquelles $R^1$ à $R^6$ ont les significations déjà données tandis que $R^{10}$ représente l'hydrogène, avec des aldéhydes de formule générale $R^6HCO$ et des polyamines de formule $HR^7$, à des températures de 20 à 200 °C, de préférence de 70 à 150 °C, le symbole $R^7$ représentant un des radicaux (II) à (XII) et la proportion molaire base de Mannich : aldéhyde : polyamine étant d'environ 1 : 1 : 1, et, que l'on ait adopté l'un ou l'autre de ces deux modes opératoires, on élimine du produit réactionnel, lorsque la réaction a été effectuée, l'eau et les partenaires réactionnels qui n'ont pas réagi.

3. Mode d'exécution selon la revendication 1, caractérisé en ce qu'on utilise les bases de Mannich préparées par le procédé de la revendication 2 en une proportion de 5 à 90 % en poids, de préférence de 5 à 30 % en poids, avec des bases de Mannich répondant à la formule XIII

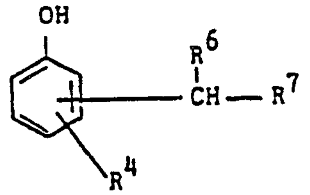

(XIII)

dans laquelle $R^4$, $R^6$ et $R^7$ ont les significations données à la revendication 1, les bases de Mannich de formule XIII étant mises en jeu en une proportion de 10 à 95 % en poids, de préférence de 70 à 95 % en poids.

4. Mode d'exécution selon l'une des revendications 1 et 3, caractérisé en ce que les bases de Mannich de formule générale I sont utilisées en une quantité qui équivaut à celle des radicaux époxy ou qui correspond à un défaut ou à un excès d'au plus 50 % en moles.

5. Procédé de préparation de bases de Mannich de formule générale XIII selon la revendication 3, procédé caractérisé en ce qu'on fait réagir des bases de Mannich de formule générale I dans lesquelles $R^1$ à $R^6$ ont les significations données à la revendication 1, et $R^{10}$ représente H, à des températures de 20 à 200 °C, de préférence de 50 à 150 °C, avec des polyamines de formule $HR^7$ dans lesquelles $R^7$ représente un des radicaux (II) à (XII), le rapport molaire base de Mannich : polyamine étant compris entre 2 : 1 et 1 : 1, et une amine de formule générale XIV (dans laquelle $R^1$ à $R^3$ ont les significations déjà données) étant éliminée comme indiqué à la revendication 2.

6. Mode d'exécution selon l'une ou plusieurs des revendications 1 à 5, caractérisé en ce que les symboles $R^1$ à $R^7$ ont les significations suivantes : $R^1$ à $R^3$ représentent chacun un alkyle qui contient de 1 à 3 atomes de carbone et qui ne portent pas de substituant, $R^4$ représente l'hydrogène ou un alkyle contenant de 1 à 9 atomes de carbone, $R^6$ représente l'hydrogène et $R^7$ représente le radical de la xylylène-diamine ou de la triéthylène-tétramine.